# EUROPÄISCHE PATENTSCHRIFT

(11) **EP 0 485 721 B1**
(45) Veröffentlichungstag und Bekanntmachung des Hinweises auf die Patenterteilung: **15.12.1993**
(21) Anmeldenummer: 91116175.0
(22) Anmeldetag: 24.09.1991
(51) Int. Cl.: C02F 11/12, F26B 7/00

(54) **Verfahren und Anlage zur Teiltrocknung von Klärschlamm**
Process and installation for partial drying of sewage sludge
Procédé et dispositif pour le séchage partiel de boues d'épuration

(30) Priorität: 13.11.1990 DE 4036136
(43) Veröffentlichungstag der Anmeldung: 20.05.1992
(73) Patentinhaber: DEUTSCHE BABCOCK ANLAGEN GMBH, 46049 Oberhausen (DE)
(72) Erfinder: Wischniewski, Martin, W-4150 Krefeld 11 (DE); Thomas, Stephan, Dr., W-4150 Krefeld (DE)
(74) Vertreter: Planker, Karl-Josef, Dipl.-Phys.

(56) Entgegenhaltungen:
- EP-A- 0 155 927
- DE-C- 3 915 082
- AUFBEREITUNGS TECHNIK. Bd. 29, Nr. 5, Mai 1988, WIESBADEN DE Seiten 243 - 251; H.G.BÄUERLE ET AL.: 'Die Kontakttrocknung von kommunalen Klärschlämmen'
- PATENT ABSTRACTS OF JAPAN vol. 9, no. 286 (M-429)(2009) 13. November 1985

## Beschreibung

Die Erfindung betrifft ein Verfahren und eine Anlage zur Teiltrocknung von Klärschlamm gemäß dem Oberbegriff des Anspruchs 1 bzw. des Anspruchs 11.

Zur Deponierung von Klärschlamm auf Hausmülldeponien oder auf Monodeponien muß der Klärschlamm zumindest teilgetrocknet sein.

Ein Verfahren zur Teiltrocknung auf einen TS-Gehalt (Trockensubstanzgehalt in Massen - %) bis etwa 50 %, bei dem der Klärschlamm zunächst mechanisch entwässert und anschließend getrocknet wird, ist in der DE-Z "Aufbereitungstechnik", Heft 5/88, 29. Jahrgang, Seiten 243 bis 251, beschrieben. Dabei ist der Teiltrocknung eine Wirbelschichtverbrennung nachgeschaltet, in der der teilgetrocknete Klärschlamm verbrannt wird.

Wird der Klärschlamm nach der Teiltrocknung nicht direkt in die Wirbelschichtverbrennung gefördert, sondern zur Deponierung eingesetzt, so findet beim Verlassen des Trockners eine starke Dampfbildung statt. Die durch die hohe Temperatur des Klärschlammes, z.B. von 90 bis 100 Grad C, am Ausgang des Trockners erzeugte Dampfbildung ist mit der Gefahr von Korrosion der mit dem Dampf in Berührung kommenden Anlagenteile und mit Geruchsbelästigung in der Umgebung verbunden.

Die erste Aufgabe der Erfindung besteht darin, ein Verfahren zur Teiltrocknung gemäß dem Oberbegriff des Anspruchs 1 mit reduzierter Dampfbildung zu entwickeln.

Die zweite Aufgabe besteht darin, eine Anlage gemäß dem Oberbegriff des Anspruchs 9 zur Durchführung eines Verfahrens nach Anspruch 1 zu entwickeln.

Das kennzeichnende Merkmal des Anspruchs 1 löst die erste Aufgabe.

Bei einem erfindungsgemäßen Verfahren wird der mechanisch entwässerte, teilgetrocknete Klärschlamm durch Verdampfung flüssiger Bestandteile gekühlt. Die Kühlung erfolgt, indem der Klärschlamm mit ungesättigter, erwärmter Luft in Kontakt gebracht wird.

Bei der Kühlung durch Verdampfung wird dem Klärschlamm durch den Kontakt mit ungesättigter Luft die zur Verdampfung benötigte Energie entzogen. Der Energieentzug bewirkt die Abkühlung des Klärschlammes. Je kälter der Klärschlamm ist, um so geringer ist auch die Dampfbildung. Die Korrosionsgefahr und die Geruchsbelästigung sind reduziert.

Wird die Luft, mit der der Klärschlamm in Kontakt gebracht wird, erwärmt, so verringert sich ihr Sättigungsgrad und damit erhöht sich die aus dem Klärschlamm aufnehmbare Menge Wasserdampf. Dadurch wir die Abgasmenge der Kühlung reduziert und die Verdampfung und damit die Kühlung beschleunigt. Auf Temperaturen von 100 bis 200°C erwärmte Luft kann eine große Menge Wasserdampf, und zwar mindestens etwa 150 g pro kg trockener Luft, aufnehmen. Bei der Erwärmung auf 130 bis 170 °C zu einer gut ausreichenden Steigerung der aufnehmbaren Wassermenge.

Diese geringe Abgasmenge wird erfindungsgemäß einer Verwendung oder einer Wiederverwendung, bei der aufgenommene Bestandteile entfernt werden, zugeführt. Dadurch wird die Geruchsbelästigung der Umgebung vollständig vermieden.

Bei der Kühlung durch Verdampfung wird dem Klärschlamm gleichzeitig etwas Wasser entzogen, d.h. der TS-Gehalt steigt um etwa 1 bis 3 %. Der Entzug von Wasser, insbesondere von der Oberfläche des Klärschlammes, verbessert seine Qualität verglichen mit ungekühltem, aber auch mit auf andere Weise gekühltem Klärschlamm, z.B. bei einer indirekten Wasserkühlung, bildet sich durch an den kalten Wärmetauscherflächen eines Wasserkühlers kondensierten Dampf ein Schmierfilm auf der Oberfläche des Klärschlammes, der seine Handhabbarkeit und seine Qualität verschlechtert. Der kondensierte Dampf führt außerdem zu Anbackungen an den Wärmetauscherflächen des Kühlers und damit zu einem schlechteren Wärmeübergang. Neben dem Vorteil der besseren Qualität des Klärschlammes kann daher bei einer Kühlung durch Verdampfung ein einfacherer Kühler ohne Probleme mit Wärmetauscherflächen eingesetzt werden.

Verglichen mit einer direkten Kühlung, z.B. mit gekühlter Luft oder Umgebungsluft, führt eine Kühlung durch Verdampfung wegen des Wasserentzuges ebenfalls zu einer verbesserten Schlammqualität. Ihr besonderer Vorteil gegenüber einer direkten Kühlung mit Kühlerluft besteht in einer wesentlich geringeren Abgasmenge.

Durch die Ausbreitung des Klärschlammes bei der Kühlung gemäß Anspruch 2 wird eine große freie Oberfläche, an der die Verdampfung stattfindet, erzeugt. Eine freie Oberfläche von 0,04 bis 0,50 m² pro kg Klärschlamm entspricht einer ausreichend großen Austauschfläche, die wegen einer beschränkten Größe des Kühlers nicht beliebig groß gewählt werden kann.

Das Verfahren gemäß Anspruch 3 ist besonders zur Kühlung des teilgetrockneten Klärschlammes um 10 bis 30 °C auf z.B. 80 °C geeignet und ein Verfahren gemäß Anspruch 4 zur Kühlung um 30 bis 60 °C auf z.B. 40 °C.

Sowohl bei einer direkten Trocknung, z.B. mit heißer Luft, als auch bei einer indirekten Trocknung, z.B. mit Heißdampf oder erwärmten Öl wird ein Wärmeträger, nämlich die heiße Luft, der Heißdampf oder das erwärmte Öl eingesetzt. Vorteil des Anspruchs 5 ist, daß dieser Wärmeträger zur Erwärmung der Luft eingesetzt wird.

Wird bei der Erzeugung des Wärmeträgers für die Trocknugn des Klärschlammes eine Verbrennungsvorrichtung, z.B. ein Dampferzeuger eingesetzt, so kann die Abluft der Kühlung einfach entsorgt werden, indem sie gemäß Anspruch 6 in die Verbrennungsvorrichtung geleitet wird.

Wird der Wärmeträger dagegen von außerhalb zugeführt, so besteht eine einfache Behandlung der Abluft darin, daß sie gemäß Anspruch 7 in die Kühlung zurückgeführt wird. Vor der Rückführung wird die Abluft zunächst von den aufgenommenen, flüssigen Bestandteilen befreit und wieder erwärmt.

Der Vorteil einer indirekten Trocknung des Klärschlammes nach Anspruch 8 ist, daß die aus dem Trockner kommende Abluft eine geringere Menge und ein besseres Emissionsverhalten aufweist als die Abluft einer direkten Trocknung.

Die kennzeichnenden Merkmale des Anspruchs 9 lösen die zweite Aufgabe.

Durch die Anordnung eines Verdunstungskühlers direkt hinter dem Trockner, wobei der Verdunstungskühler über eine Fördereinrichtung mit dem Trockner verbunden ist, werden die Wege des teilgetrockneten, warmen Klärschlammes bis zum Verdunstungskühler und damit die Dampfbildung vor der Kühlung gering.

Eine Anlage gemäß Anspruch 10 ist besonders zur Durchführung eines Verfahrens nach Anspruch 5, eine Anlage gemäß Anspruch 11 zur Durchführung eines Verfahrens nach Anspruch 6 und eine Anlage gemäß Anspruch 12 zur Durchführung eines Verfahrens nach Anspruch 7 geeignet.

Bei einer Anlage gemäß Anspruch 13, bei der der Verdunstungskühler als Trogkettenförderer oder als Bandförderer ausgebildet ist, wird der Klärschlamm im Kühler automatisch, d.h. ohne großen Aufwand, ausgebreitet. Eine derartige Anlage ist besonders zur Durchführung eines Verfahrens nach Anspruch 2 geeignet.

Bei einer Anlage gemäß Anspruch 14 weist der als Untertrumförderer ausgebildete Verdunstungskühler oberhalb des ausgebreiteten Klärschlammes einen ausreichend großen Luftraum auf.

Die Zeichnung dient der Erläuterung der Erfindung anhand zweier schematisch dargestellter Beispiele für Anlagen zur Durchführung eines erfindungsgemäßen Verfahrens.

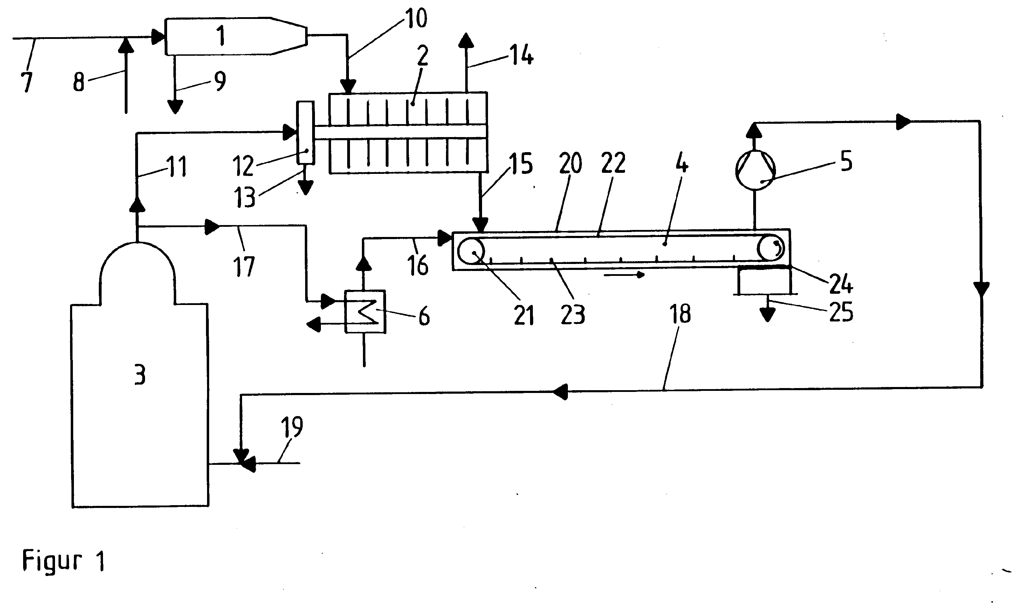

Bei dem in Figur 1 dargestellten Beispiel 1 weist die Anlage eine Verbrennungsvorrichtung zur Erzeugung eines Wärmeträgers für einen Trockner auf.

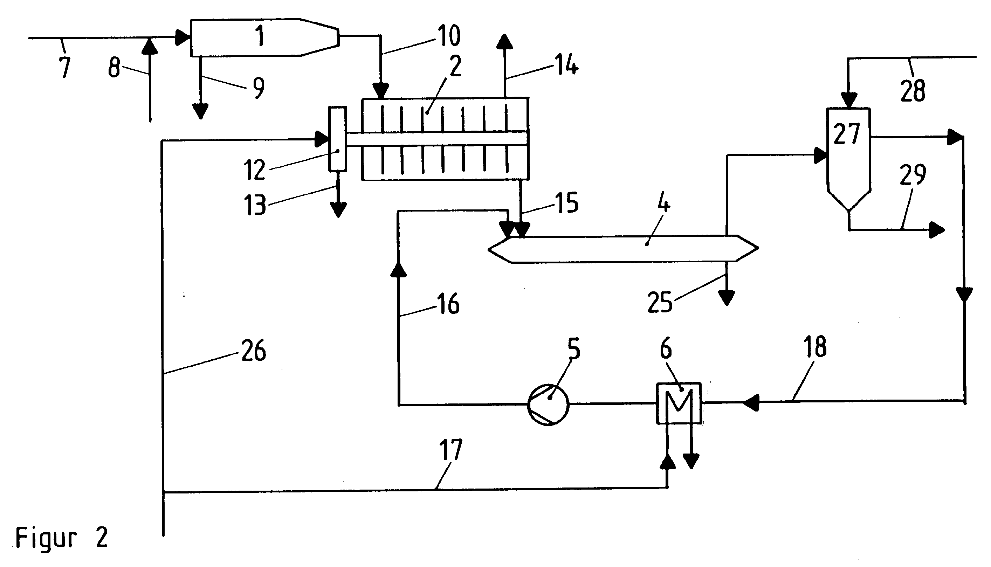

Bei dem in Figur 2 dargestellten Beispiel 2 wird der Wärmeträger von außen zugeführt. Die Anlage des Beispiels 2 weist daher Leitungen zur Rezirkulation der Abluft des Verdunstungskühlers auf.

### Beispiel 1:

Wesentliche Komponenten der in Figur 1 dargestellten Anlage zur Teiltrocknung von Klärschlamm sind eine Zentrifuge 1 zur maschinellen Entwässerung, ein Kontakttrockner 2 mit einem Dampferzeuger 3 und ein Verdunstungskühler 4 mit einem Gebläse 5 und einem Wärmetauscher 6.

In die Zentrifuge 1 mündet eine Klärschlammleitung 7 von einer Abwasseraufbereitungsanlage, an die eine Leitung 8 zur Zufuhr von Flockungshilfsmittel angeschlossen ist. An die Zentrifuge 1 ist außerdem eine Leitung 9 zur Rückleitung des Schlammwassers zur Abwasseraufbereitungsanlage angeschlossen.

Eine Austrageinrichtung 10 der Zentrifuge 1 mündet im Eingang des Kontakttrockners 2. Eine Leitung 11 ist ausgehend von dem Dampferzeuger 3 ebenfalls zum Eingang des Kontakttrockners 2 geführt. Dort mündet sie in einem vor den Kontakttrockner 2 angebrachten Dampftopf 12, der mit einer Leitung 13 zur Abfuhr von Kondensat versehen ist. An den Kontakttrockner 2 ist außerdem eine Leitung 14 zum Abzug von Brüden angebracht.

Der Kontakttrockner 2 ist mit auf einem Rotor angeordneten, scheibenförmigen Heizflächen ausgestattet, wie in der DE-Z "Aufbereitungstechnik", Heft 5/88, 29. Jahrgang, Seiten 243 bis 251, beschrieben.

Vom Ausgang des Kontakttrockners 2 ausgehend ist eine Fördereinrichtung 15 zum Eingang des Verdunstungskühlers 4 geführt. Zum Verdunstungskühler 4 ist außerdem eine Luftzufuhrleitung 16, in der der Wärmetauscher 6 angeordnet ist, geführt. Der Wärmetauscher 6 ist über eine von der Leitung 11 abzweigende Leitung 17 an die Dampfversorgung aus dem Dampferzeuger 3 angeschlossen.

Vom Ausgang des Verdunstungskühlers 4 ausgehend mündet eine Abluftleitung 18, in der das Gebläse 5 angeordnet ist, in eine Luftzufuhrleitung 19 des Dampferzeugers 3.

Der Verdunstungskühler 4 ist als Trogkettenförderer, und zwar als Untertrumförderer, ausgebildet. Er weist ein langgestrecktes, luftdichtes Gehäuse 20 mit einem rechteckigen Querschnitt auf (wobei in Figur 1 ein Längsschnitt des Verdunstungskühlers 4 schematisch dargestellt ist). Im Innern des Gehäuses 20 befinden sich zwei parallele, um zwei Walzen 21, umlaufende Ketten 22, die durch senkrecht zu den Ketten 21 und parallel zueinander angeordnete Bleche, sogenannte Schaber 23, verbunden sind. Am Ausgang des Verdunstungskühlers 4 ist ein Schieber 24 und unter dem Schieber 24 eine Ausfuhrvorrichtung 25 für den teilgetrockneten, gekühlten Klärschlamm angeordnet.

Im Betrieb wird der nasse Klärschlamm, dessen TS-Gehalt etwa 5 % beträgt, unter Zugabe von Flockungshilfsmittel in die Zentrifuge 1 gefördert. Dort wird das Schlammwasser abgetrennt, wobei der TS-Gehalt auf 17 bis 35 % angehoben wird.

Der maschinell entwässerte Klärschlamm wird über die Austrageinrichtung 10 in den Kontakttrockner 2 gefördert, in dem er unter fortwährender Umwälzung durch Berührung mit heißen Flächen auf einen TS-Gehalt von 40 bis 55 % getrocknet wird. Der zur Trocknung eingesetzte Heißdampf wird im Dampferzeuger 3 erzeugt und über die Leitung 11 zum Kontakttrockner 4 geleitet.

Der Klärschlamm verläßt den Kontakttrockner 2 mit einer Temperatur von 90 bis 100 Grad C und wird sofort über die Fördereinrichtung 15 zum Eingang des Verdunstungskühlers 4 gefordert. Im Verdunstungskühler 4 verteilt sich der von oben herabfallende Klärschlamm und wird mit Hilfe der Schaber 23 zum Ausgang transportiert. Bei der Ausbreitung wird eine freie Oberfläche von 0,04 bis 0,50 m² pro kg Klärschlamm erzeugt.

Über den ausgebreiteten Klärschlamm wird Luft, die aus der Umgebung angesaugt und im Wärmetauscher 6 durch aus dem Dampferzeuger 3 stammenden Dampf auf 130 bis 170 Grad C erwärmt wird, geführt. Durch denKontakt mit dieser ungesättigtenLuft findet eine Verdampfung der flüssigen Bestandteile und damit eine Abkühlung des Klärschlammes statt. Der TS-Gehalt reduziert sich um etwa 2 %.

Die im Verdunstungskühler entstehende Abluft wird über das Gebläse 5 in der Abluftleitung 18 zur Luftzufuhrleitung 19 des Dampferzeugers 3 geleitet.

### Verfahrensbeispiele

In diesem Beispiel weist der aus dem Kontakttrockner 2 kommende Klärschlamm einen TS-Gehalt von etwa 50 % und eine Temperatur von 100 Grad C auf und wird im Verdunstungskühler 4 auf eine Temperatur von höchstens 80 Grad C und einen TS-Gehalt von etwa 52 % gebracht. Die freie Oberfläche wird dabei auf etwa 0,05 m²/kg eingestellt. Die Dauer des Kontaktes zwischen Luft und Klärschlamm beträgt 1 bis 3 min, z.B. 2 min, und die pro kg Klärschlamm eingesetzte Luftmenge 0,8 bis 1,5 kg, z.B. 1,0 kg.

Wird der Klärschlamm auf eine tiefere Temperatur, z.B. 40 Grad C gebracht, so wird bei gleicher freier Oberfläche sowohl die Dauer des Kontaktes zwischen Luft und Klärschlamm als auch die pro kg Klärschlamm eingesetzte Luftmenge erhöht. Die Dauer des Kontaktes beträgt z.B. 3 bis 10 min und die Luftmenge z.B. 1,5 bis 5,0 kg.

### Beispiel 2:

Die in Figur 2 dargestellte Anlage des Beispiels 2 unterscheidet sich von der des Beispiels 1 folgendermaßen:

Statt des Dampferzeugers 3 mit der Leitung 11 weist die Anlage des Beispiels 2 eine Leitung 26 zur Zuführung von Dampf von außerhalb der Anlage auf. Von dieser Leitung 26 zweigt die Leitung 17 zum Wärmetauscher 6 ab.

Die Luftzufuhrleitung 16 geht vom Wärmetauscher 6 aus, und die Abluftleitung 18 mündet im Wärmetauscher 6. Das Gebläse 5 ist in der Luftzufuhrleitung 16 angeordnet. Zusätzlich ist ein Kondensator 27, an den eine Leitung 28 zur Zufuhr von Kühlmedium und eine Leitung 29 zur Abfuhr von Kondensat angeschlossen sind, in der Abluftleitung 18 angeordnet.

Im Betrieb wird die Abluft des Verdunstungskühlers 4 im Kondensator 27 von den aufgenommenen, flüssigen Bestandteilen befreit. Als Kühlmedium wird Wasser des Ablaufes der Kläranlage, Brauchwasser oder Frischwasser eingesetzt.

Die von Kondensat befreite Abluft wird im Wärmetauscher 6 mit Hilfe des von außen kommenden Wärmeträgers, z.B. Heißdampf, mit dem auch der Kontakttrockner 2 versorgt wird, wieder aufgewärmt und in den Verdunstungskühler 4 zurückgeführt.

## Patentansprüche

1. Verfahren zur Teiltrocknung von Klärschlamm,
- der zunächst auf einen Trockensubstanzgehalt von 17 bis 35 % mechanisch entwässert und
- anschließend auf einen TS-Gehalt von 40 bis 55 % getrocknet wird,
dadurch gekennzeichnet, daß
- der Klärschlamm nach dem Trocknen durch Verdampfung flüssiger Bestandteile gekühlt wird,
- indem der Klärschlamm mit ungesättigter, auf eine Temperatur von 100 bis 200 °C, insbesondere von 130 bis 170 °C, erwärmter Luft in Kontakt gebracht wird, und
- die dabei entstehende Abluft einer Verwendung oder einer Wiederverwendung, bei der aufgenommene Bestandteile entfernt werden, zugeführt wird.

2. Verfahren nach Anspruch 1, dadurch gekennzeichnet, daß der Klärschlamm bei der Kühlung ausgebreitet wird, wobei seine freie Oberfläche 0,04 bis 0,50 m²/kg beträgt.

3. Verfahren nach einem der Ansprüche 1 oder 2, dadurch gekennezeichnet, daß bei der Kühlung des Klärschlammes die Dauer des Kontaktes zwischen Luft und Klärschlamm 1 bis 3 min beträgt, wobei pro kg Klärschlamm eine Luftmenge von 0,8 bis 1,5 kg eingesetzt wird.

4. Verfahren nach einem der Ansprüche 1 oder 2, dadurch gekennzeichnet, daß bei der Kühlung des Klärschlammes die Dauer des Kontaktes zwischen Luft und Klärschlamm 3 bis 10 min beträgt, wobei pro kg Klärschlamm eine Luftmenge von 1,5 bis 5,0 kg eingesetzt wird.

5. Verfahren nach einem der Ansprüche 1 bis 4, bei dem zum Trocknen des Klärschlammes ein Wärmeträger eingesetzt wird, dadurch gekennzeichnet, daß die Luft durch diesen Wärmeträger erwärmt wird.

6. Verfahren nach einem der Ansprüche 1 bis 5, bei dem zur Erzeugung des Wärmeträgers eines Verbrennungsvorrichtung eingesetzt wird, dadurch gekennzeichnet, daß die Abluft der Kühlung in die Verbrennungsvorrichtung geleitet wird.

7. Verfahren nach einem der Ansprüche 1 bis 5, dadurch gekennzeichnet, daß die Abluft der Kühlung nach Entfernung der aufgenommenen, flüssigen Bestandteile und nach Erwärmung zur Kühlung zurückgeführt wird.

8. Verfahren nach einem der Ansprüche 1 bis 7, dadurch gekennzeichnet, daß der Klärschlamm indirekt getrocknet wird.

9. Anlage zur Teiltrocknung von Klärschlamm nach Anspruch 1, mit einer maschinellen Entwässerungseinrichtung, mit einem Trockner und mit einer von der Entwässerungseinrichtung ausgehenden, zum Trockner geführten Fördereinrichtung, gekennzeichnet durch einen Verdunstungskühler (4) mit einem Gebläse (5), zu dem eine vom Trockner ausgehende Fördereinrichtung (15) und eine Luftzufuhrleitung (16), in der ein Wärmetauscher (6) zum Aufwärmen der Luft angeordnet ist, und von dem eine Abluftleitung (18) zu einer Vorrichtung zur Verwendung oder Wiederverwendung des Abgases geführt ist.

10. Anlagen nach Anspruch 9, mit einer zum Trockner geführten Leitung (11) für den Wärmeträger, dadurch gekennzeichnet, daß von dieser Leitung (11) eine Leitung (17) zum Wärmetauscher (6) abzweigt.

11. Anlage nach einem der Ansprüche 9 oder 10, mit einer Verbrennungsvorrichtung, von der die Leitung für den Wärmeträger zum Trockner geführt ist, dadurch gekennzeichnet, daß eine Abluftleitung (18) vom Verdunstungskühler (4) zur Verbrennungsvorrichtung geführt ist.

12. Anlage nach einem der Ansprüche 9 oder 10, dadurch gekennzeichnet, daß eine Abluftleitung (18) vom Verdunstungskühler (4) über einen Kondensator (27) zu dem Wärmetauscher (6) geführt ist.

13. Anlage nach einem der Ansprüche 9 bis 12, dadurch gekennzeichnet, daß der Verdunstungskühler (4) als Trogkettenförderer oder als Bandförderer ausgebildet ist.

14. Anlage nach Anspruch 13, dadurch gekennzeichnet, daß der Trogkettenförderer als Untertrumförderer ausgebildet ist.

15. Anlage nach einem der Ansprüche 10 bis 14, dadurch gekennzeichnet, daß der Trockner ein Kontakttrockner (2) ist.

## Claims

1. A method for partial drying of sewage sludge,
- which is at first being dewatered mechanically up to a dry substance content of 17 to 35 %,
- and then is being dried to a dry substance content ranging from 40 to 55 %,
characterised in that
- sewage sludge is after drying being cooled by means of evaporation of liquid components,
- sewage sludge is being contacted with unsaturated, heated air, which is heated up to temperatures of 100 to 200°C, especially 130 to 170°C and
- resuting exhaust air is being fed to an application or reapplication, from which the picked up components are being removed.

2. A method according to claim 1 characterised in that sewage sludge is being spread out while cooling, whereby its free surface amounts form 0,04 to 0,05 m²/kg.

3. A method according to one of claims 1 or 2 characterised in that, while cooling the sewage sludge, the contact between air and sewage sludge lasts 1 to 3 minutes, whereby an air quantity of 0,8 to 1,5 kg has been applied per kg sewage sludge.

4. A method according to one of claims 1 or 2 characterised in that, while cooling the sewage sludge, the contact between air and sewage sludge lasts 3 to 10 minutes, whereby an air quantity of 1,5 to 5,0 kg has been applied per kg sewage sludge.

5. A method according to one of the claims 1 to 4 in which a heating medium is applied for drying the sewage sludge characterised in that, the heating medium heats the air.

6. A method according to one of claims 1 to 5 in which a combustion device has been used in order to produce the heating medium characterised in that exhaust gas coming from the cooling is fed to the combustion device.

7. A method according to one of the claims 1 to 5 characterised in that exhaust gas coming from the cooling is fed back to cooling after having heated and removed the picked-up liquid components.

8. A method to one of claims 1 to 7 characterised in that the sewage sludge is dried indirectly.

9. An installation for partial drying of sewage sludge according to claim 1 comprising a mechanical dewatering device, a dryer and a conveying device proceeding from the dewatering device and leading to the dryer
characterised by
- a evaporation cooler (4) with a fan (5),
- a conveying device leading from the dryer (2) to the evaporation cooler(4),
- an air inlet pipe (6), in which a heat exchanger (6) is located to heat up the air, leading to the evaporation cooler (4) and
- an exhaust gas pipe (18) leading from the evaporation cooler(4) to an application or reapplication device of exhaust gas.

10. An installation according to claim 9 with a pipe (11) for the heating medium leading to the dryer characterised in that a pipe (17) leading to the heat exchanger (6) is branched of the pipe (11).

11. An installation according to one of claims 9 or 10 with an combustion device, from which the pipe for the heating medium leads to the dryer, characterised by an exhaust gas pipe (18) leading from the evaporation cooler (4) to the combustion device.

12. An installation according to one of the claims 9 or 10 characterised by an exhaust gas pipe (18) leading from evaporation cooler (4) via condenser (27) to the heat exchanger (6).

13. An installation according to one of claims 9 to 12 characterised in that the evaporation cooler (4) is designed as drag link conveyer or as belt conveyor.

14. An installation according to claim 13 characterised in that a drag link conveyor is designed as drag link lower trough conveyor.

15. An installation according to one of claims 10 to 14 characterised in that the chosen dryer is a contact dryer (2).

## Revendications

1. Procédé pour le séchage partiel de boues d'épuration,
- qui sont tout d'abord déshydratées mécaniquement jusqu'à une teneur en substances sèches comprise entre 17 et 35 %, et
- sont ensuite séchées jusqu'à une teneur en substances sèches de 40 à 55 %,
caractérisé par le fait que
- les boues d'épuration sont refroidies, à l'issue du séchage, par évaporation de composants liquides,
- en mettant les boues d'épuration en contact avec de l'air non saturé, réchauffé jusqu'à une température de 100 à 200°C, notamment de 130 à 170°C, et
- l'air d'évacuation ainsi produit est délivré à un système d'utilisation ou de réutilisation dans lequel des composants prélevés sont éliminés.

2. Procédé selon la revendication 1, caractérisé par le fait que les boues d'épuration sont répandues lors du refroidissement, leur surface libre mesurant de 0,04 à 0,50 m²/kg.

3. Procédé selon l'une des revendications 1 ou 2, caractérisé par le fait que, lors du refroidissement des boues d'épuration, la durée du contact entre l'air et les boues d'épuration est de 1 à 3 min, une quantité d'air de 0,8 à 1,5 kg étant mise en oeuvre pour chaque kg de boues d'épuration.

4. Procédé selon l'une des revendications 1 ou 2, caractérisé par le fait que, lors du refroidissement des boues d'épuration, la durée du contact entre l'air et les boues d'épuration est de 3 à 10 min, une quantité d'air de 1,5 à 5,0 kg étant mise en oeuvre pour chaque kg de boues d'épuration.

5. Procédé selon l'une des revendications 1 à 4, dans lequel un caloporteur est utilisé pour le séchage des boues d'épuration, caractérisé par le fait que l'air est réchauffé par ce caloporteur.

6. Procédé selon l'une des revendications 1 à 5, dans lequel un dispositif de combustion est employé pour la production du caloporteur, caractérisé par le fait que l'air d'évacuation provenant du refroidissement est dirigé dans le dispositif de combustion.

7. Procédé selon l'une des revendications 1 à 5, caractérisé par le fait que l'air d'évacuation provenant du refroidissement est renvoyé au refroidissement après élimination des composants liquides prélevés, et après réchauffage.

8. Procédé selon l'une des revendications 1 à 7, caractérisé par le fait que les boues d'épuration sont séchées en mode indirect.

9. Installation pour le séchage de boues d'épuration selon la revendication 1, comprenant un dispositif de déshydratation automatique, un sécheur et un dispositif de convoyage qui part du dispositif de déshydratation et gagne le sécheur, caractérisée par un refroidisseur (4) par évaporation muni d'une soufflerie (5), vers lequel sont dirigés un dispositif de convoyage (15) qui part du sécheur, et un conduit (16) d'amenée d'air dans lequel un échangeur thermique (6) est installé pour le réchauffage de l'air, refroidisseur dont part un conduit (18) à air d'évacuation gagnant un dispositif d'utilisation ou de réutilisation des gaz évacués.

10. Installation selon la revendication 9, présentant un conduit (11) destiné au caloporteur et gagnant le sécheur, caractérisée par le fait qu'un conduit (17) bifurque de ce conduit (11) en direction de l'échangeur thermique (6).

11. Installation selon l'une des revendications 9 ou 10, présentant un dispositif de combustion dont part le conduit destiné au caloporteur et gagnant le sécheur, caractérisée par le fait qu'un conduit (18) à air d'évacuation part du refroidisseur (4) par évaporation, en direction du dispositif de combustion.

12. Installation selon l'une des revendications 9 ou 10, caractérisée par le fait qu'un conduit (18) à air d'évacuation part du refroidisseur (4) par évaporation, et gagne l'échangeur thermique (6) en transitant par un condenseur (27).

13. Installation selon l'une des revendications 9 à 12, caractérisée par le fait que le refroidisseur (4) par évaporation est réalisé sous la forme d'un convoyeur par chaînes à augets ou sous la forme d'un convoyeur à bande(s).

14. Installation selon la revendication 13, caractérisée par le fait que le convoyeur par chaînes à augets est réalisé sous la forme d'un convoyeur à brin inférieur actif.

15. Installation selon l'une des revendications 10 à 14, caractérisée par le fait que le sécheur est un sécheur (2) par contact.
